# EUROPÄISCHE PATENTSCHRIFT

(11) **EP 1 584 606 B1**
(45) Veröffentlichungstag und Bekanntmachung des Hinweises auf die Patenterteilung: **19.11.2008**
(21) Anmeldenummer: 05005114.3
(22) Anmeldetag: 09.03.2005
(51) Int. Cl.: C02F 9/02, C02F 3/12

(54) **Verfahren zur biologischen Wassergewinnung aus Abwasser mit Hilfe eines Wirbelbettreaktors**
Method for biological recovering water from waste water by means of a fluidized bed reactor
Procédé de récuperation biologique de l'eau à partir d'eaux usées à l'aide d'un réacteur à lit fluidisé

(30) Priorität: 09.03.2004 DE 102004011849; 26.03.2004 DE 102004015470; 22.04.2004 DE 102004020235
(43) Veröffentlichungstag der Anmeldung: 12.10.2005
(73) Patentinhaber: Passavant-Roediger Umwelttechnik GmbH, 65326 Aarbergen (DE)
(72) Erfinder: Xiaohu Dai, Dr., 63512 Hainburg (DE)
(74) Vertreter: Stoffregen, Hans-Herbert

(56) Entgegenhaltungen:
- WO-A-97/28093
- DE-A1- 4 326 603
- DE-A1- 10 105 221
- US-A1- 2003 201 225
- PATENT ABSTRACTS OF JAPAN Bd. 016, Nr. 533 (C-1002), 4. November 1992 (1992-11-04) & JP 04 200697 A (HITACHI CHEM CO LTD; others: 04), 21. Juli 1992 (1992-07-21)
- K. PÖPPINGHAUS ET AL.: "Abwassertechnologie - Entstehung, Ableitung, Behandlung, Analytik der Abwässer" 1994, SPRINGER-VERLAG , BERLIN HEIDELBERG NEW YORK * Seite 764 - Seite 771 *

## Beschreibung

Die Erfindung bezieht sich auf ein Verfahren zur Wassergewinnung aus Abwasser, wobei das Abwasser einer Vorklärung, in einer Zwischenstufe einer biologischen Abwasserreinigung, einer Nachklärung und sodann einer Desinfizierung unterzogen wird.

Um Abwasser zu reinigen, ist es bekannt, dieses zunächst einem Vorklärbecken zuzuführen, in dem eine Abtrennung der im Rohwasser enthaltenden Feststoffe erfolgt. Entsprechende Vorklärbecken werden üblicherweise hinter einem Sandfang und einem Fettabscheider angeordnet. Dabei dient das Vorklärbecken zur mechanischen Absonderung feinster Teilchen, die entweder sedimentieren oder an der Oberfläche schwimmen. Die am Beckengrund sich ablagernden Substanzen, die vorwiegend aus organischen Materialien bestehen, bilden einen Primärschlamm, der aus dem Vorklärbecken abgezogen und in einen Faulturm befördert wird.

Nach der Vorklärung wird das Abwasser einer biologischen Abwasserreinigung unterzogen. Hierzu kann das Abwasser einem Belebungsbecken zugeführt werden, in dem eine aerob-biologische Reinigung erfolgt. Im Bodenbereich sind Belüfterkörper angeordnet, über die Druckluft eingeführt wird.

Alternativ kann ein Festbettreaktor zur biologischen Abwasserreinigung benutzt werden. Dabei sind in einem Behälter Füllkörper aufgeschichtet, die mit entschlammtem Abwasser berieselt werden. Bei den Füllkörpern, die als Bewuchsoberfläche für die Biozönose dienen, kann es sich um Natursteine wie Bims, Kies oder Lavaschlacke oder um Kunststoffelemente handeln.

Nach der biologischen Abwasserreinigung wird das Wasser einer Nachklärung unterzogen, bei der eine Trennung des gereinigten Abwassers von den am Reinigungsprozess beteiligten biologischen Schlämmen erfolgt. Die Nachklärung kann dadurch erfolgen, dass durch Verlangsamung der Fließgeschwindigkeit eine Sedimentation unter Sauerstoff erfolgt. Es erfolgt eine Trennung zwischen Belebtschlamm und gereinigtem Wasser, wobei der Belebtschlamm größtenteils in die biologische Abwasserreinigungsstufe zurückgeführt wird. Nicht zurückgeführter Schlamm wird wie der Primärschlamm unmittelbar einer Schlammbehandlung unterzogen.

Nach der Nachklärung wird das Wasser üblicherweise filtriert, also einem mechanischen Trennverfahren unterzogen. Als Filtermaterialien kommen z. B. Quarzsand oder Aktivkohle in Frage. Sodann kann eine Desinfizierung mittels UV-Strahlen erfolgen.

Ein Verfahren zur Wassergewinnung mit den Verfahrensschritten Vorklärung, biologische Abwasserreinigung in einem Belebungsbecken und Nachklärung mittels einer in einem Nachklärbecken angeordneten Membran ist der DE-A-101 05 221 zu entnehmen. Das der Nachklärung entnommene gereinigte Wasser wird sodann zur Erlangung von Trinkwasserqualität einer Reihe zusätzlicher Verfahrensschritte wie Strahlenbehandlung und Überleitung des gereinigten Wassers über Aktivkohle unterzogen.

Die WO-A-97/28093 bezieht sich auf eine biologische Kleinkläranlage, bei der die biologische Reinigung in einem Wirbelbettreaktor erfolgt. Die Nachklärung wird durch Sedimentation durchgeführt.

Entsprechende Abwasserreinigungsanlagen zur Gewinnung von Wasser sind aufgrund der durchzuführenden Verfahrensschritte recht voluminös und bedürfen umfassender Erfahrung, um eine ordnungsgemäße Nutzung sicherzustellen.

Der vorliegenden Erfindung liegt das Problem zu Grunde, ein Verfahren zur Wassergewinnung aus Abwasser der eingangs genannten Art so weiterzubilden, dass bei verfahrensmäßiger Vereinfachung und kompaktem Aufbau der zu verwendenden Anlage Wasser mit hinreichender Güte gewonnen werden kann. Auch soll das Verfahren energetisch günstig betrieben werden können.

Erfindungsgemäß wird das Problem gelöst durch ein

Verfahren zur Wassergewinnung aus Abwasser mit den Verfahrensschritten:
- Vorklären des Abwassers,
- biologisches Reinigen des vorgeklärten Abwassers in einem Wirbelbettreaktor,
- Nachklären des biologisch gereinigten Abwassers mittels einer Mikrosiebung und
- unmittelbares Desinfizieren des der Mikrosiebung entnommenen Filtrats,
wobei ein Teil von in dem Wirbelbettreaktor vorhandenem Abwasser in die Vorklärung zurückgeführt wird.

Zwar ist es bekannt, die aus Tropfkörpern und Rotationstauchkörpern ausgespülten Rasenfragmente mit Hilfe von Mikrosieben abzutrennen. Anschließend erfolgt jedoch in üblicher Weise eine Nachklärung, Filtration und Desinfizierung (s. ATV-Handbuch, "Biologische und weitergehende Abwasserreinigung", 4. Auflage, 1997, S. 155 ff., 193 ff.).

Abweichend vom vorbekannten Stand der Technik werden die Behandlungsschritte zur Wassergewinnung aus Abwasser reduziert, wobei gleichzeitig der Durchsatz erhöht wird. So wird zur biologischen Abwasserreinigung ein Wirbelbettreaktor benutzt, der Füllmaterial mit einer spezifischen Oberfläche > 700 m²/m³, insbesondere zwischen 800 m²/m³ und 1200 m²/m³ enthält. Ferner sollten als Füllmaterial Körper verwendet werden, die eine Dichte ρ mit 0,85 g/m³ ≤ ρ ≤ 0,99 g/cm³ aufweisen.

Zwar ist es bekannt, Wirbelbettreaktoren zur Abwasserbehandlung einzusetzen. Allerdings werden diese nicht in Abwasserbehandlungsanlagen eingesetzt, in denen die Nachklärung durch Mikrosiebung erfolgt.

Des Weiteren wird bei der Erfindung ein Teilstrom des Ablaufes vom Wirbelbett in die Vorklärung zurückgeleitet. Dadurch wird die Feststoffbelastung der Mikrosiebung reduziert und eine bessere Ablaufqualität zur weiteren Behandlung erzielt.

In Weiterbildung der Erfindung wird vorgeschlagen, dass das Abwasser in der Vorklärung eine oder mehrere Flockungsstufen und sodann einen Lamellenabscheider durchströmt, um anschließend dem Wirbelbettreaktor zugeführt zu werden.

Auch besteht die Möglichkeit, um den Feststoffgehalt des Abwassers, das mittels Mikrosiebung nachgeklärt werden soll, zu reduzieren, zwischen dem Wirbelbettreaktor und der Mikrosiebung öder nach der Mikrosiebung eine oder mehrere Flockungsstufen und sowie einen Lamellenabscheider anzuordnen.

Zur Mikrosiebung wird insbesondere ein Stahlgewebe mit Öffnungsweiten zwischen 20 µm und 40 µm verwendet. Dabei sollte der Mikrosiebung vorgereinigtes Abwasser zugeführt werden, dessen Feststoffgehalt < 150 mg/l, insbesondere < 100 mg/l beträgt. Dies ist durch eine interne Rezirkulation möglich.

Sodann wird das der Mikrosiebung entnommene Filtrat unmittelbar vorzugsweise mittels UV-Strahlung desinfiziert, um dem gewünschten Einsatzzweck zugeführt zu werden.

Weitere Einzelheiten, Vorteile und Merkmale der Erfindung ergeben sich nicht nur aus den Ansprüchen, den diesen zu entnehmenden Merkmalen -für sich und/oder in Kombination, sondern auch aus der nachfolgenden Beschreibung von der Zeichnung zu entnehmenden bevorzugten Ausführungsbeispielen.

Es zeigen:
- Fig. 1: eine Prinzipdarstellung zur Erläuterung eines üblichen Verfahrens zur Wassergewinnung aus Abwasser,
- Fig. 2: eine Prinzipdarstellung einer ersten Ausführungsform der erfindungsgemäßen Lehre zur Durchführung eines Verfahrens zur Wassergewinnung aus Abwasser und
- Fig. 3: eine alternative Ausführungsform zu der der Fig. 2 zu entnehmenden.

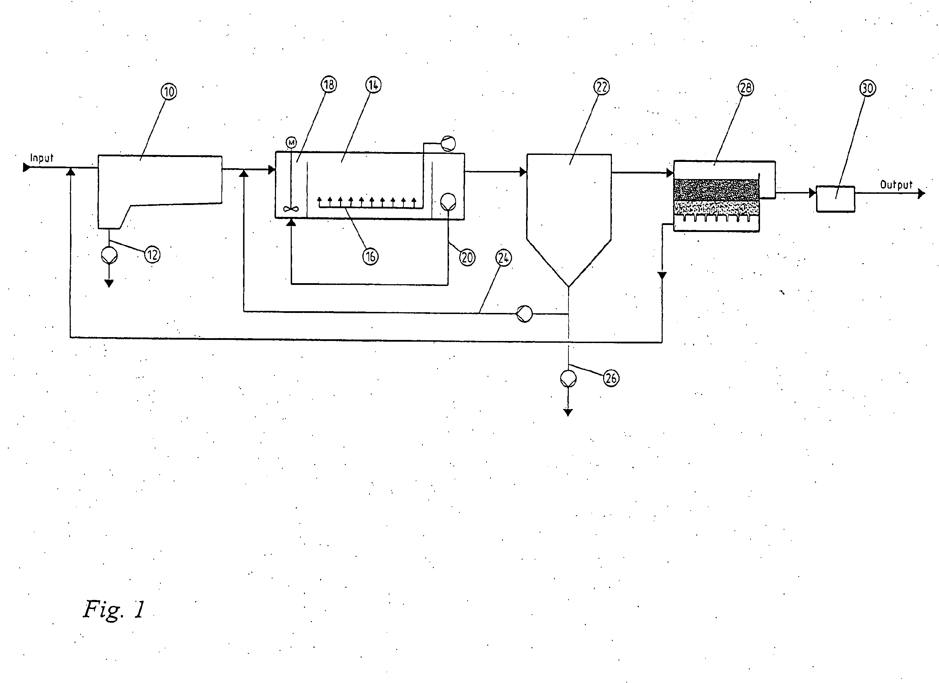

Der Fig. 1 ist eine Prinzipdarstellung zur Erläuterung des Verfahrensablaufs zur Wassergewinnung aus Abwasser nach dem Stand der Technik zu entnehmen. So wird zu reinigendes Abwasser üblicherweise zunächst einem Vorklärbecken 10 zugeführt, in dem eine mechanische Absonderung feinster Teilchen erfolgt. Am Beckengrund sich ablagernde Substanzen bilden einen sogenannten Primärschlamm, der über eine Leitung 12 abgezogen und einem Faulbehälter zugeführt wird. Von dem Vorklärbecken gelangt das Abwasser zu einem Belebungsbecken 14, in dem eine biologische Abwasserreinigung erfolgt. Da diese aerob durchgeführt wird, befinden sich im Bodenbereich des Beckens 14 Belüfterkörper 16, über die Druckluft dem Abwasser zugeführt wird. Ferner kann ein Rührer 18 zum Durchmischen des Abwassers in dem Belebungsbecken 14 vorhanden sein. Über eine Leitung 20 kann des Weiteren ein Teilstrom zur Denitrifikation in das Becken 14 zurückgeführt werden.

Von dem Belebungsbecken 14 kommend wird das biologisch gereinigte Abwasser nachgeklärt. Hierzu ist ein Becken 22 vorhanden, in dem eine Verlangsamung der Fließgeschwindigkeit des Abwassers erfolgt, wodurch eine Sedimentation absetzbarer Stoffe erfolgt. Es erfolgt eine Trennung zwischen gereinigtem Wasser und Belebtschlamm, wobei über eine Leitung 24 Rücklaufschlamm der biologischen Reinigung (Belebungsbecken 14) zurückgeführt wird. Verbleibender Schlamm wird wie der Primärschlamm über eine Leitung 26 einem Faulbehälter zugeführt. Das vom Belebtschlamm gereinigte Wasser wird schließlich einer Filtration unterzogen. Hierzu kann ein Bett 28 aus Quarzsand verwendet werden. Sodann erfolgt in einer Behandlungsstufe 30 eine Desinfizierung z. B. mit UV-Strahlung.

Somit sind nach dem Stand der Technik zwingend fünf Verfahrensstufen erforderlich, um aus Abwasser Wasser zu gewinnen. Dabei ist stets eine Nachklärung mit anschließender Filtration integriert.

Demgegenüber ist erfindungsgemäß vorgesehen, dass nach einer Vorklärung in einem im Zusammenhang mit der Fig. 1 beschriebenen Vorklärbecken 10 eine biologische Reinigung in einem Wirbelbettreaktor 32 erfolgt, von dem das biologisch gereinigte Abwasser entweder unmittelbar einer Mikrosiebstufe 34 oder einem sogenannten Lamellenseparator-Eindickerraum 36 zugeführt wird, der aus dem Prospekt "Das Passavant-Turbo-LME-Verfahren", D-65322 Aarbergen, 2/2000, bekannt ist. Der Lamellenseparator-Eindickerraum 36 umfasst dabei mehrere Flockungsstufen 38, in die Flockungsmittel bzw. Polyelektrolyt zugegeben wird. Nach den Flockungsstufen ist ein Lamellenseparator 40 geschaltet, um von einem Ablauf 42 das Wasser der Mikrosiebstufe 34 zuzuführen.

Der Lamellenseparator 40 ist dabei oberhalb eines Eindickerraums 44 angeordnet. Am Boden des Eindickerraums 44 angesammelter Schlamm wird entweder über eine Leitung 46 als Kontaktschlamm einer Flockungsstufe wieder zugeführt oder - wie der Primärschlamm - über eine Leitung 48 einem Faulbehälter.

Das Mikrosieben in der Stufe 34 erfolgt in einer Trommel 50, die in einer Betonkammer oder in einem Stahlblechbecken montiert ist. Das Rohwasser fließt durch das Lager einlaufseitig in das Trommelinnere ein und durchströmt den umlaufenden Trommelkäfig von innen nach außen. Die Umfangswandung der Trommel 50 setzt sich insbesondere aus einzelnen Siebkörben zusammen, die ein Stahlgewebe mit Öffnungsweiten vorzugsweise zwischen 20 µm und 40 µm aufweisen. Die Siebtrommel 50 wird im Filtrat gedreht, wobei ein oberer Abschnitt außerhalb des Filtrats verläuft. Um beim Auftauchen der Siebkörper aus dem Filtrat ein Zurücklaufen oder -fallen der an dem Siebgewebe haftenden Schmutzstoffe zu verhindern, sind Schaufelbleche vorgesehen. Die auf der Innenseite der Siebgewebe zurückgehaltenen Partikel werden beim Umlauf der flachgewölbten Siebkörper im Scheitelpunkt der Trommel oberhalb des Flüssigkeitsspiegels von außen nach innen abgespritzt. Die Partikel fallen in eine innenliegende Schmutzwasserrinne und werden von dort durch einen axialen Ablauf in einen Schmutzwassersammelkanal 56 abgeführt. Die Abspritzung des Siebgutes erfolgt mit einem Wasserdruck von 4,0 bis 6,0 bar über eine Spritzwasserleitung, die mit Hochleistungsflachstrahldüsen ausgerüstet sein kann. Als Reinigungswasser wird Filtrat benutzt.

Der Reinwasseräuslauf erfolgt entweder über eine Überlaufkante 55, die eine Feinanpassung an die jeweiligen hydraulischen Verhältnisse gestattet, oder durch Schlitze in der Umfangswandung des Behälters 54.

Das aus der Trommel 50 aufgefangene Reinigungswasser mit den Partikeln wird über die Leitung 56 zur Vorklärung zurückgeführt.

Unmittelbar nach der Mikrosiebung erfolgt eine Desinfizierung vorzugsweise mittels UV-Strahlung. Die entsprechende Behandlungsstufe ist mit dem Bezugszeichen 52 gekennzeichnet.

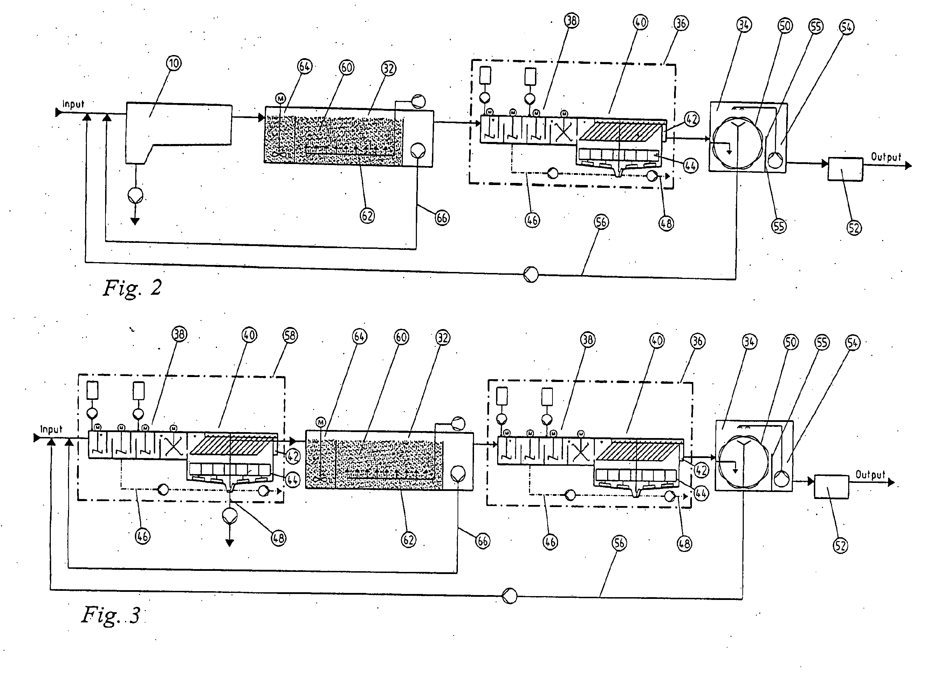

Wie sich aus der Fig. 3 ergibt, in der die der Fig. 2 entsprechenden Bezugszeichen für gleiche Elemente verwendet werden, kann die Vorklärung über einen Lamellenseparator-Eindicker 58 erfolgen, der dem Lamellenseparator-Eindicker 36 gemäß Fig. 2 entspricht, so dass gleichfalls gleiche Bezugszeichen benutzt werden.

Der Wirbelbettreaktor 32 enthält Füllmaterial 60 mit einer spezifischen Oberfläche vorzugsweise im Bereich zwischen 800 m²/m³ und 1200 m²/m³. Als Material für die Füllkörper kommt insbesondere Kunststoff mit einer Dichte zwischen 0,85 g/cm³ und 0,99 g/cm³ in Frage. Im Bodenbereich des Wirbelbettreaktors 12 befinden sich Belüftungskörper 62, über die im erforderlichen Umfang Druckluft in den Reaktor 32 eingeführt wird. Zum Durchmischen des Abwassers ist ferner ein Rührer 64 vorgesehen. Flüssigkeit bzw. abgesetzte Feststoffe werden des Weiteren über eine Leitung 66 der Vorklärstufe zugeführt. Es erfolgt eine Rezirkulierung. Hierdurch ergibt sich der Vorteil, dass die Mikrosiebung nicht - wie bei herkömmlichen Verfahren - mit einer hohen TS-Konzentration belastet wird, so dass sich die Reinigungsleistung erhöht. Gegebenenfalls könnte sodann auf eine Desinfektion verzichtet werden.

## Patentansprüche

1. Verfahren zur Wassergewinnung aus Abwasser mit den Verfahrensschritten:
- Vorklären des Abwassers,
- biologisches Reinigen des vorgeklärten Abwassers in einem Wirbelbettreaktor,
- Nachklären des biologisch gereinigten Abwassers mittels einer Mikrosiebung und
- unmittelbares Desinfizieren des der Mikrosiebung entnommenen Filtrats,
wobei ein Teil von in dem Wirbelbettreaktor vorhandenem Abwasser in die Vorklärung zurückgeführt wird.

2. Verfahren nach Anspruch 1,
**dadurch gekennzeichnet,**
**dass** das Abwasser in der Vorklärung eine oder mehrere Flockungsstufen und sodann einen Lamellenabscheider durchströmt und anschließend dem Wirbelbettreaktor zugeführt wird.

3. Verfahren nach Anspruch 1 oder 2,
**dadurch gekennzeichnet,**
**dass** das Abwasser vor der Mikrosiebung und nach der biologischen Abwasserreinigung eine oder mehrere Flockungsstufen und sodann einen Lamellenabscheider durchströmt.

4. Verfahren nach zumindest einem der vorhergehenden Ansprüche,
**dadurch gekennzeichnet,**
**dass** in dem Wirbelbettreaktor Füllmaterial mit einer spezifischen Oberfläche > 700 m²/m³, vorzugsweise zwischen 800 m²/m³ und 1200 m²/m³ eingesetzt wird.

5. Verfahren nach zumindest einem der vorhergehenden Ansprüche,
**dadurch gekennzeichnet,**
**dass** als Füllmaterial Körper mit der Dichte ρ mit 0,85 g/cm³ ≤ ρ ≤ 0,99 g/cm³ verwendet wird.

6. Verfahren nach zumindest einem der vorhergehenden Ansprüche,
**dadurch gekennzeichnet,**
**dass** das Füllmaterial aus Kunststoff besteht.

7. Verfahren nach zumindest einem der vorhergehenden Ansprüche,
**dadurch gekennzeichnet,**
**dass** das Abwasser zur Mikrosiebung ein Stahlgewebe mit Öffnungsweiten zwischen 20 µm und 40 µm durchströmt.

8. Verfahren nach zumindest einem der vorhergehenden Ansprüche,
**dadurch gekennzeichnet,**
**dass** die Mikrosiebung in einer umfangsseitig das Stahlgewebe aufweisenden Trommel erfolgt, in deren Inneres das zu reinigende Abwasser einströmt und sodann das Stahlgewebe durchsetzt.

9. Verfahren nach zumindest einem der vorhergehenden Ansprüche,
**dadurch gekennzeichnet,**
**dass** Abwasser mit einem Feststoffgehalt < 150 mg/l, insbesondere < 100 mg/l der Mikrosiebung zugeführt wird.

10. Verfahren nach zumindest einem der vorhergehenden Ansprüche,
**dadurch gekennzeichnet,**
**dass** das Abwasser unmittelbar nach der Mikrosiebung mit UV-Strahlung desinfiziert wird.

## Claims

1. A method for obtaining water from wastewater comprising the method steps:
- preclarification of the wastewater,
- biological purification of the preclarified wastewater in a fluidised bed reactor,
- postclarification of the biologically purified wastewater by means of microstraining
and
- immediate disinfection of the filtrate drawn from microstraining,
a proportion of the wastewater present in the fluidised bed reactor being recirculated to the preclarification.

2. A method according to claim 1, **characterised in that,** in preclarification, the wastewater passes through one or more flocculation stages and then a lamella separator and is then fed to the fluidised bed reactor.

3. A method according to claim 1 or claim 2, **characterised in that,** before microstraining and after biological wastewater treatment, the wastewater passes through one or more flocculation stages and then a lamella separator.

4. A method according to at least one of the preceding claims, **characterised in that** packing material with a specific surface area of > 700 m²/m³, preferably of between 800 m²/m³ and 1200 m²/m³ is used in the fluidised bed reactor.

5. A method according to at least one of the preceding claims, **characterised in that** articles having a density ρ of 0.85 g/cm³ ≤ ρ ≤ 0.99 g/cm³ are used as the packing material.

6. A method according to at least one of the preceding claims, **characterised in that** the packing material consists of plastics.

7. A method according to at least one of the preceding claims, **characterised in that,** for microstraining, the wastewater passes through a steel fabric with apertures of between 20 µm and 40 µm.

8. A method according to at least one of the preceding claims, **characterised in that** microstraining proceeds in a drum comprising the steel fabric arranged circumferentially, into the interior of which the wastewater to be purified flows and then passes through the steel fabric.

9. A method according to at least one of the preceding claims, **characterised in that** wastewater with a solids content of < 150 mg/l, in particular of < 100 mg/l, is fed to the microstraining.

10. A method according to at least one of the preceding claims, **characterised in that,** immediately after microstraining, the wastewater is disinfected with UV radiation.

## Revendications

1. Procédé pour l'exploitation de l'eau à partir d'eaux usées comprenant les étapes suivantes :
- décantation primaire des eaux usées,
- épuration biologique des eaux usées dans un réacteur à lit fluidisé,
- décantation secondaire des eaux usées épurées biologiquement à l'aide d'une microfiltration
et
- désinfection immédiate du filtrat obtenu par microfiltration, sachant qu'une partie des eaux usées présentes dans le réacteur à lit fluidisé est ramenée dans la décantation primaire.

2. Procédé selon la revendication 1,
**caractérisé en ce**
**que** dans la décantation primaire, les eaux usées traversent un ou plusieurs étage(s) de floculation et donc un décanteur lamellaire, puis sont ramenées dans le réacteur à lit fluidisé.

3. Procédé selon la revendication 1 ou 2,
**caractérisé en ce**
**qu'**avant la microfiltration et après l'épuration biologique, les eaux usées traversent un ou plusieurs étage(s) de floculation et donc un décanteur lamellaire.

4. Procédé selon au moins l'une des revendications précédentes,
**caractérisé en ce**
**que** dans le réacteur à lit fluidisé est placée une matière de remplissage ayant une surface spécifique > 700 m²/m³, comprise de préférence entre 800 m²/m³ et 1200 m²/m³.

5. Procédé selon au moins l'une des revendications précédentes,
**caractérisé en ce**
**qu'**un corps ayant une masse volumique ρ, avec 0,85 g/cm³ ≤ ρ < 0,99 g/cm³, est utilisé comme matière de remplissage.

6. Procédé selon au moins l'une des revendications précédentes,
**caractérisé en ce**
**que** la matière de remplissage est constituée de matière synthétique.

7. Procédé selon au moins l'une des revendications précédentes,
**caractérisé en ce**
**que** pour la microfiltration, les eaux usées traversent un treillis en acier ayant des ouvertures de mailles comprises entre 20 µm et 40 µm.

8. Procédé selon au moins l'une des revendications précédentes,
**caractérisé en ce**
**que** la microfiltration a lieu dans un tambour présentant le treillis en acier sur sa circonférence, à l'intérieur duquel s'introduisent les eaux usées à épurer et traversent donc le treillis en acier.

9. Procédé selon au moins l'une des revendications précédentes,
**caractérisé en ce**
**que** les eaux usées sont amenées à la microfiltration avec une teneur en matières solides < 150 mg/l, en particulier < 100 mg/l.

10. Procédé selon au moins l'une des revendications précédentes,
**caractérisé en ce**
**que** les eaux usées sont désinfectées avec un rayonnement UV immédiatement après la microfiltration.
